# EUROPEAN PATENT SPECIFICATION

(11) **EP 2 150 070 B1**
(45) Date of publication and mention of the grant of the patent: **08.06.2016**
(21) Application number: 08752132.4
(22) Date of filing: 25.04.2008
(51) Int. Cl.: H04W 24/10, H04W 24/08, H04W 4/02, H04W 84/04

(54) **MOBILE COMMUNICATION SYSTEM, BASE STATION DEVICE, MOBILE STATION DEVICE AND PROPAGATION STATUS GATHERING METHOD**
MOBILES KOMMUNIKATIONSSYSTEM, BASISSTATION, MOBILSTATION UND AUSBREITUNGSSTATUSERFASSUNGSVERFAHREN
SYSTÈME DE COMMUNICATION MOBILE, DISPOSITIF DE STATION DE BASE, DISPOSITIF DE STATION MOBILE ET PROCÉDÉ DE RASSEMBLEMENT D'ÉTAT DE PROPAGATION

(30) Priority: 27.04.2007 JP 2007120264
(43) Date of publication of application: 03.02.2010
(73) Proprietor: NTT DOCOMO, INC., Chiyoda-ku Tokyo 100-6150 (JP)
(72) Inventor: INOUE, Yuki, Tokyo 100-6150 (JP); CHO, Keizo, Tokyo 100-6150 (JP); MORI, Shinichi, Tokyo 100-6150 (JP); HOSONO, Hiroyuki, Tokyo 100-6150 (JP); ISHII, Akira, Tokyo 100-6150 (JP); IGARASHI, Kei, Tokyo 100-6150 (JP)
(74) Representative: Hoffmann Eitle
(86) International application number: PCT/JP2008/058089
(87) International publication number: WO 2008/136418

(56) References cited:
- EP-A2- 1 030 528
- WO-A1-00/70897
- JP-A- 08 293 828
- JP-A- 2003 204 296
- JP-A- 2004 274 313
- JP-A- 2005 006 124
- JP-A- 2006 520 119
- US-A1- 2004 097 237
- US-A1- 2005 026 626

## Description

### BACKGROUND OF THE INVENTION

### 1. Field of the Invention

The present invention relates to mobile communications systems, base station apparatuses, mobile station apparatuses, and propagation state collecting methods.

### 2. Description of the Related Art

In order to build and manage a communication area in a mobile communications system, it is necessary to grasp an incoming state (propagation state) of a radio wave wireless signal) from a surrounding base station at each location within the communications area and to set and change base station parameters based on the propagation state data collated with location information for a measurement location. The "propagation state" may include various states which may be measured at the mobile station side, including reception strength, frequency, polarization, and waveform, etc., of the radio wave from the surrounding base station as well as variations of the states over time.

Moreover, in order to respond to needs for conducting a smooth handover between the base stations, there is somewhat of an overlap between a surrounding portion of a communications area of a base station and a communications area of an adjacent base station. Thus, wireless signals come from the multiple base stations. Therefore, the surrounding base station at a measurement location includes not only a single base station at the center of a communications area that is selected as having the highest reception quality if a mobile station resides there, but also an adjacent single base station or adjacent multiple base stations. Moreover, depending on the environment, there may be a wireless signal incoming from a non-adjacent base station.

Conventionally, the base stations have been installed and managed by an operator at the communications provider side. The operator has conducted measurements at each location using a dedicated measurement device aboard a measurement vehicle, and set and changed the base station parameters based on the measurement results.

EP 1 030 528 A2 relates to a method of making downlink operational measurements in a wireless communication system. Here, the document discloses sending a measurement request from a first base station to a second base station, wherein this request requests the second base station to instruct a mobile terminal in communication therewith to make operation measurement of at least one signal transmitted by the first base station.

### Non-patent document 1:

3GPP TSG RAN #35 RP-070209 Lemesos, Cyprus, 6-9 March 2007(http://www.3gpp.org/ftp/tsg_ran/TSG_RAN/TSGR_35/Docs/)

### SUMMARY OF THE INVENTION

### [Problem(s) to be solved by the Invention]

As described above, the base stations have conventionally been installed and managed by the operator at the communications provider side. Thus, there are no particular problems when all the stations are managed by the communications provider. However, the situation has changed as a user-installed home base station (Home eNodeB: see Non-patent document 1) has emerged. The home base station may also be called "Home NodeB", "Femto Cell", or "Access Point".

In other words, such a home base station is expected to be installed in the order of one set per household, for example. This means that the number of communications areas to be managed is going to be huge. Thus, it will be difficult for the operator at the communications provider side to make rounds to measure the propagation state as it has conventionally been done.

Moreover, the home base station is to be installed within the home, etc. Thus, it is difficult for the operator at the communications provider side to enter into the home, etc., to measure the propagation state. Therefore, it is not possible to measure an effect of a macro base station (a communications provider-installed relatively large-sized base station), which covers the communications area of the home base station on the home base station and on the mobile station within the communications area, which could cause a degradation , etc. , of reception quality due to interference, etc.

The present invention is being proposed in light of the conventional problems as described above. The obj ect of the present invention is to provide a mobile communications system, a base station apparatus, a mobile station apparatus, and a propagation state collecting method that make it possible for a mobile station which resides within an area covered by a base station (regardless of whether it is a macro base station or a home base station) to obtain the propagation state of a wireless signal from a surrounding base station (regardless of whether it is a macro base station or a home base station) as well as location information for a measurement location.

### [Means for solving the Problem]

The object is solved by the features of the independent claims. Preferred embodiments are described in the dependent claims. In order to overcome the problem as described above, in an example, a mobile communications system is provided, including a unit which causes a mobile station apparatus residing within a communication area of an arbitrary base station apparatus to measure a propagation state of a wireless signal from a surrounding base station apparatus and which collects the measurement results; and a unit which obtains location information of the mobile station apparatus.

In an example, the mobile communications system may be provided, wherein the mobile station apparatus is caused to measure a location of the own apparatus, and the measured location is collected together with measurement results of the propagation state.

In an example, the mobile communications system may be provided, wherein the mobile station apparatus is caused to conduct a direct transmission in an uplink and a location of the mobile station apparatus is estimated in an adjacent base station apparatus with its wireless signal.

In an example, the mobile communications system may be provided, wherein a special signal for adjacent area measurement is transmitted from an adjacent base station apparatus, and the mobile station apparatus measures the propagation state based on the special signal.

In an example, the mobile communications system may be provided, including a unit which sends an instruction from a first base station apparatus which is one of adjacent base station apparatuses to a second base station apparatus which is the other of the adjacent base station apparatuses, the instruction being to cause a mobile station residing within a communications area of the second base station apparatus to measure a propagation state of a wireless signal from the first base station apparatus and report the measurement results to the first base station apparatus; and a unit which obtains, in the first base station apparatus, measurement results from the second base station apparatus.

In an example, the mobile communications system may be provided, wherein the first base station apparatus includes a unit which obtains the measurement results from the mobile station apparatus in a direct transmission in an uplink.

In an example, a base station apparatus is provided, including a unit which generates a broadcast signal instructing a mobile station apparatus residing in a communications area of the base station apparatus to measure a propagation state of a wireless signal from a surrounding base station apparatus; and a unit which receives measurement results of the propagation state from the mobile station apparatus.

In an example, a mobile station apparatus is provided, including a unit which receives, from a base station apparatus, a broadcast signal with instructions to measure a propagation state of a wireless signal from a surrounding base station apparatus; a unit which measures the propagation state of the wireless signal from the surrounding base station apparatus; and a unit which transmits, to the base station apparatus, the measurement results of the propagation state.

In an example, a method of collecting a propagation state is provided, including the steps of causing a mobile station apparatus residing within a communications area of an arbitrary base station apparatus to measure a propagation state of a wireless signal from a surrounding base station apparatus; and obtaining location information of the mobile station apparatus.

### [Advantage of the Invention]

The mobile communications system, base station apparatus, mobile station apparatus, and propagation state collecting method according to the present invention make it possible for a mobile station which resides within an area covered by a base station to obtain a propagation state of a wireless signal from a surrounding base station as well as location information for a measurement location, thereby facilitating a remote measurement of the propagation state.

### BRIEF DESCRIPTION OF THE DRAWING

FIG. 1 is a diagram illustrating an exemplary configuration of a mobile communications system according to an embodiment of the present invention;
FIG. 2 is a diagram illustrating an exemplary configuration of base stations (macro base stations and a home base station);
FIG. 3 is a diagram illustrating an exemplary configuration of a mobile station;
FIG. 4 is a diagram illustrating a first exemplary process in an embodiment;
FIG. 5 is a diagram illustrating a second exemplary process in the embodiment;
FIG. 6 is a diagram illustrating a third exemplary process in the embodiment; and
FIG. 7 is a diagram illustrating a fourth exemplary process in the embodiment.

### DESCRIPTION OF THE PREFERRED EMBODIMENTS

### [Description of Notations]

1 Network
2, 2#1, 2#2 Macro base station
21 Network communication unit
22 Broadcast signal generator
23 Mobile station opposing communication unit
24 Antenna
25 Information memory
26 Location estimating unit
27 Measurement results transmitter
3 Home base station
4#1, 4#2 Macro cell
5 Home cell
6 Mobile station
61 Antenna
62 Base station opposing communication unit
63 Broadcast signal readout unit
64 Destination switching unit
65 Propagation state data measuring unit
66 Location data measuring unit
67 Information memory
68 Measurement results transmitter

### [Best Mode of Carrying Out the Invention]

Preferred embodiments of the present invention are described below.

### System configuration

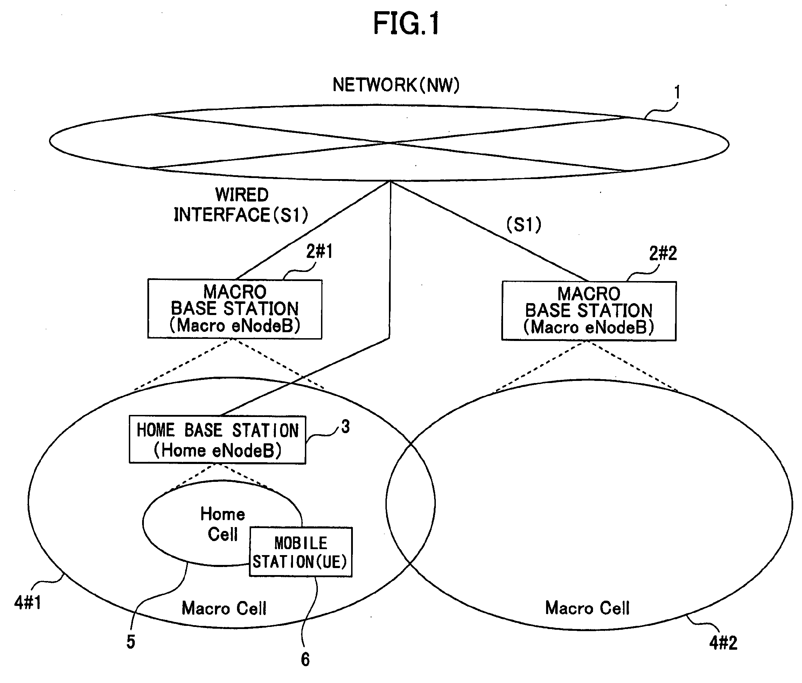

FIG. 1 is a block diagram illustrating an exemplary configuration of a mobile communications system according to an embodiment of the present invention.

In FIG. 1, a network (NW) 1 includes a user control apparatus (S-GW: serving gateway or UPE: user plane entity), which controls user data; a base station control apparatus (MME: mobility management entity), which controls a base station; and a higher-level node.

To the network 1, multiple macro base stations (Macro eNodeB) 2#1 and 2#2 are connected via a wired interface (S1 interface) and a home base station (Home eNodeB) 3 is connected via a wired circuit such as ADSL (asymmetric digital subscriber line), etc. Here, the macro base stations 2#1 and 2#2 are communications provider-installed relatively large-sized base stations, while a home base station 3 is a small-sized base station which is installed by an individual, etc. While it is possible, at the communications provider side, to grasp where the macro base stations 2#1 and 2#2 are installed, it is uncertain as to where the home base station is installed.

An area covered by a sector of the macro base station 2#1 is a macro cell 4#1, while an area covered by a sector of the macro base station 2#2 is a macro cell 4#2. Some overlapping portion is provided between the adjacent macro cells 4#1 and 4#2 to facilitate a smooth handover. An area covered by the home base station 3 is a home cell 5.

A mobile station (UE: user equipment) 6 carried by a user resides in the home cell 5. Here, the mobile station 6 is able to receive a wireless signal from the home base station 3 as well as a wireless signal from the macro base station 2#1.

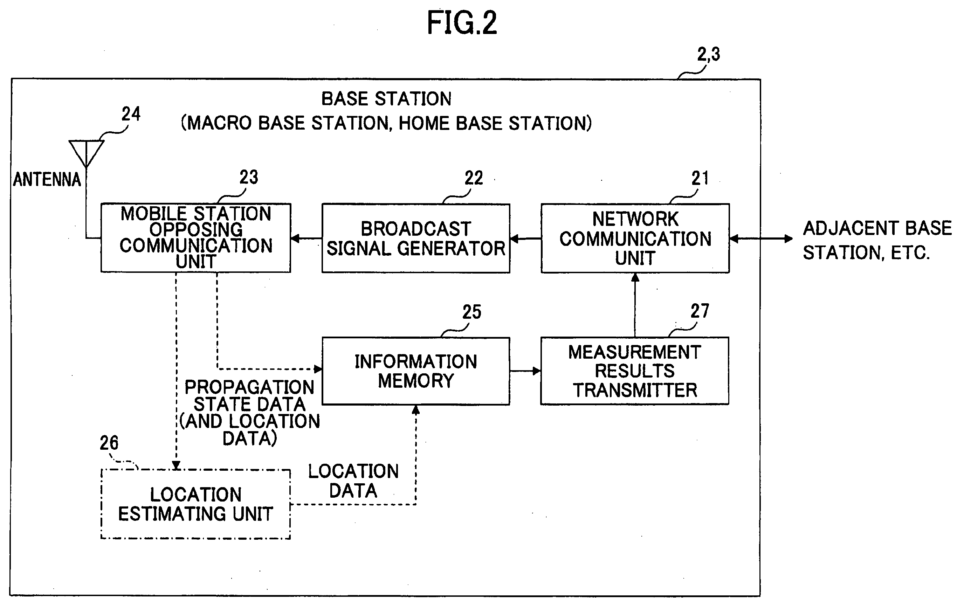

FIG. 2 is a diagram illustrating an exemplary configuration of macro base stations 2 (2#1 and 2#2) and the home base station 3.

In FIG. 2, the macro base stations 2 and home base station 3 have a network communication unit 21, which communicates via a network 1 with an adjacent base station (macro or home) or with a higher-level node; a broadcast signal generator 22, which generates a broadcast signal for a mobile station 6 when a request for measuring the propagation state is received from a different base station or a higher-level node via the network communication unit 21; and a mobile station opposing communication unit 23, which transmits the generated broadcast signal to the mobile station 6 via an antenna 24 and which receives, from the mobile station 6 via the antenna 24, propagation state data (which accompanies location data if a location measurement function is available at the mobile station 6) as measurement results.

Here, the broadcast signal for the mobile station 6 includes the following:
(1) information indicating the base station (base station connected to or a different base station) for which the propagation state is measured (example: a cell ID for specifying a base station). It may be set to report for all cell information sets listed in a surrounding-cell list rather than to report for specified cell information sets (cell IDs, etc.);
(2) information indicating the base stations (a base station connected to, a different base station or multiple base stations) to which the measured propagation state data is to be reported (for example, cell IDs for specifying the base stations);
(3) whether it is possible to directly transmit, in uplink (UL) to an adjacent base station, the propagation state data (accompanied by location data if a location measurement function is available at the mobile station). The primary purpose of directly transmitting, in the uplink, the propagation state data is location estimation. Thus, a predetermined pattern of data may be used in lieu of the propagation state data;
(4) what triggers reporting of the propagation state data measured by the mobile station (instruction from a base station, time interval, reception level threshold value), which propagation state data are accompanied by location data if the location measurement function is available at the mobile station. Measurement and reporting timings may also be reported separately to distribute the load on the mobile station 6; and
(5) whether it is possible to conduct measurements using a special signal for adjacent-area measurement as well as information on necessary timings.

Moreover, in FIG. 2, the macro base stations 2 and home base station 3 include an information memory 25, which carries propagation state data received at the mobile station opposing communication unit 23, which data is accompanied by location data if the location measurement function is available at the mobile station 6; a location estimating unit 26, which, in the absence of the location measurement function, conducts location estimation from an uplink transmit signal from the mobile station 6 and which stores the estimated location data in the information memory 25; and a measurement results transmitter 27, which transmits, via the network communication unit 21 to the requestor, measurement results (the propagation state data and location data) stored in the information memory 21.

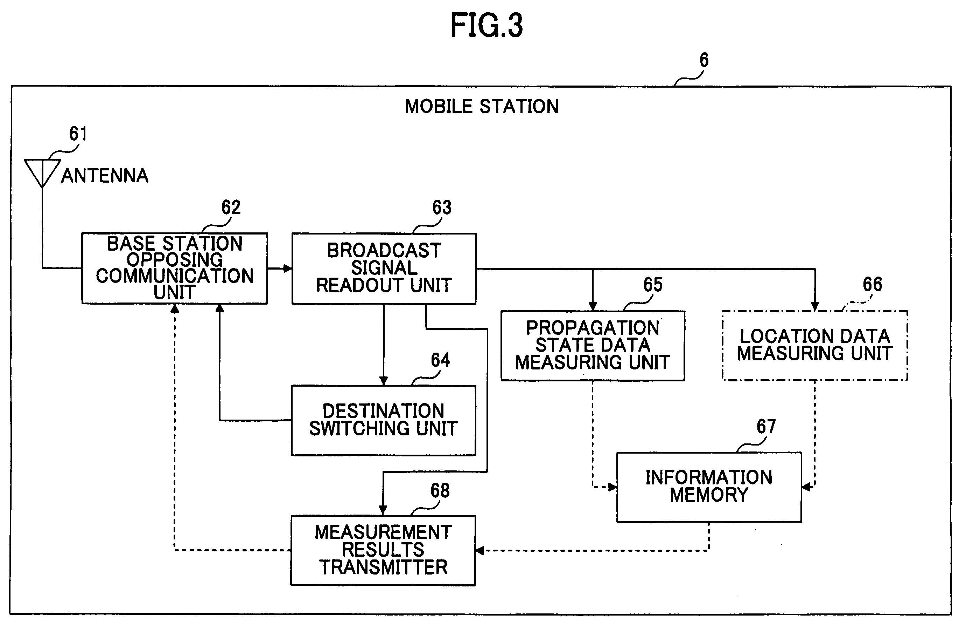

FIG. 3 is a diagram illustrating an exemplary configuration of a mobile station 6.

In FIG. 3, the mobile station 6 includes a base station opposing communication unit 62, which communicates with a base station via an antenna 61; a broadcast signal readout unit 63, which reads out a broadcast signal from a signal received at the base station opposing communication unit 62; and a destination switching unit 64, which, in accordance with instructions in the broadcast signal, switches between base stations to which measurement results are reported.

Moreover, the mobile station 6 includes a propagation state data measuring unit 65, which measures the propagation state of a predetermined base station in accordance with instructions in the broadcast signal; a location data measuring unit 66, which measures the location of the own mobile station apparatus using GPS, etc. ; an information memory 67, which carries the measured propagation state and location data; and a measurement results transmitter 68, which, when conditions for triggering in accordance with instructions in the broadcast signal, transmits, to a destination base station via the base station opposing communication unit 62, measurement results (propagation state data, location data) stored in the information memory 67. If what triggers the reporting is "instructions from the base station", the measurement results transmitter 68 waits for instructions from a base station before transmitting the measurement results and transmits the measurement results upon receiving the instructions. Moreover, if what triggers the reporting is "time interval", an event occurs internally at the specified time interval, and the measurement results are transmitted at the timing at which the event occurs. In this case, even when the event occurs, in a high load situation such as when communications are ongoing, the reporting timing may be staggered to achieve load distribution. Moreover, if what triggers the reporting is "reception level threshold value", an event occurs internally when the reception level reaches the threshold value, and the measurement results are transmitted at the timing at which the event occurs.

### Process examples

Process examples of the above embodiment are described below. While a case is exemplified of requesting measurement from the macro base station 2#1 to the home base station 3 and measuring, by the mobile station 6 which resides in an area covered by the home base station 3, the propagation state from the macro base station 2#1, the requestor base station and the requestee base station may be either of the macro base station type and the home base station type. Moreover, the propagation state of an arbitrary base station may be measured, by a mobile station which resides within an area covered by the own base station, either in accordance with a request from a higher-level node or voluntarily without going through a different base station.

### First exemplary process

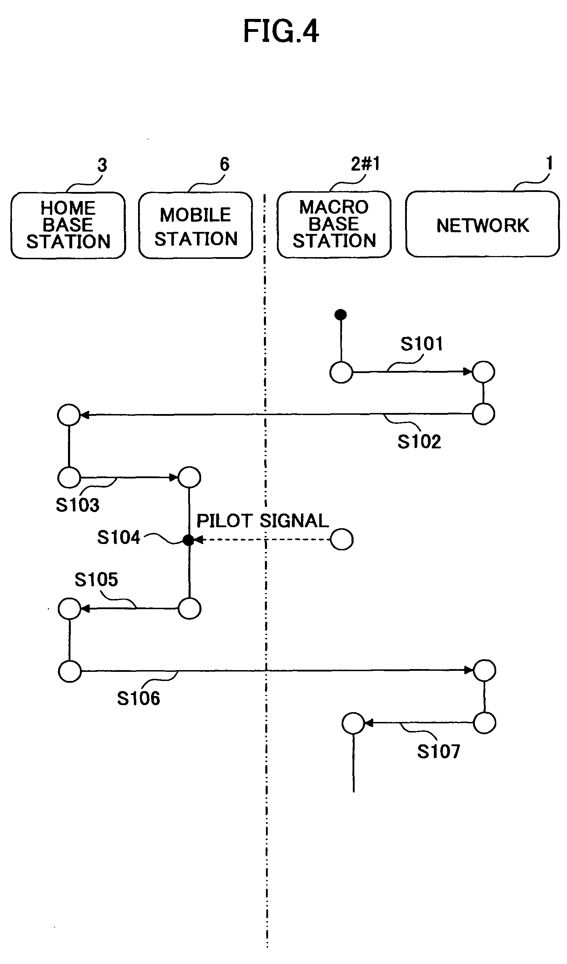

FIG. 4 is a diagram illustrating a first exemplary process in an embodiment.

In FIG. 4, the macro base station 2#1 makes a request, via a network 1, for the propagation state of a wireless signal from the macro base station 2#1 within a communication area of a home base station 3 if there is a need to know, at the macro base station 2#1, such propagation state (Steps S101, S102).

In response, the home base station 3 makes a request, to the mobile station 6 which resides within the communications area of the own base station, for sending, to the home base station 3, measurement data on the macro base station 2#1 (Step S103).

The mobile station 6 obtains propagation state data such as a path loss of a pilot signal transmitted from the macro base station 2#1, measures the location information of the own mobile station apparatus by means of GPS, etc., (Step S104), and transmits the measurement results to the home base station 3 (Step S105).

The home base station 3 transmits the received measurement results to the requestor macro base station 2#1 via the network 1 (Steps S106, S107). If multiple mobile stations reside within the communications area of the home base station 3, the home base station 3 may be arranged to be able to transmit the measurement results to the requestor macro base station 2#1 via the network when the measurement results are collected from all of the multiple mobile stations.

The process as described above makes it possible to grasp, to what extent, the radio waves from the macro base station 2#1 reach which locations within the communications area of the home base station 3.

### Second process example

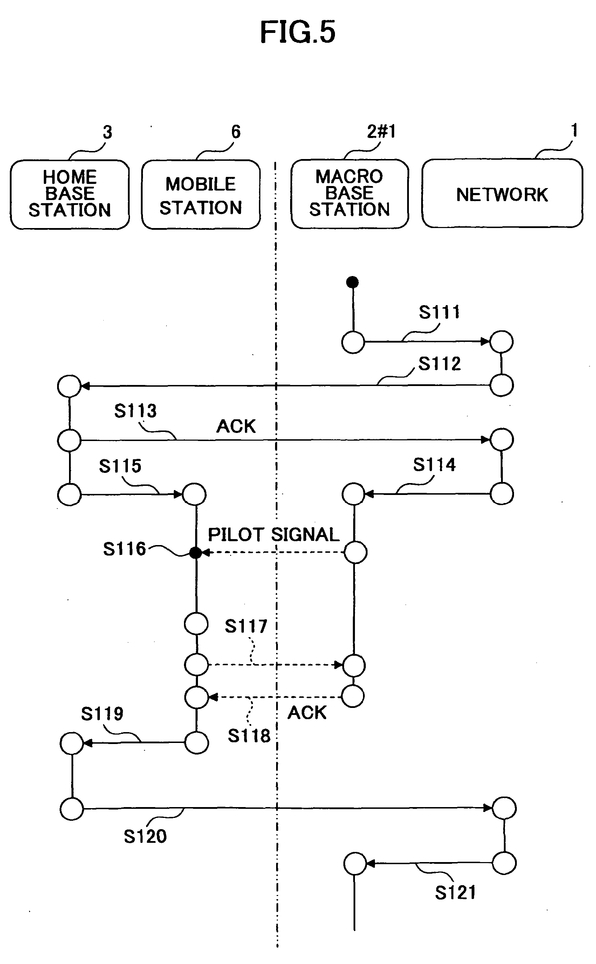

FIG. 5 is a diagram illustrating a second process example of the embodiment, which process example represents a case such that a location measurement function is not available at the mobile station 6.

In FIG. 5, the macro base station 2#1 makes a request, via the network 1, for the propagation state of a wireless signal from the macro base station 2#1 within a communication area of the home base station 3 if there is a need to know, at the macro base station 2#1, such propagation state (Steps S111, S112).

In response, the home base station 3 returns an ACK (acknowledge) via the network 1 to the macro base station 2#1 (Step S113).

Then, the home base station 3 makes a request to the mobile station 6 which resides within the communications area of the home base station 3, for sending, to the home base station 3, measurement data on the macro base station 2#1 (Step S115). At this time, the home base station 3 also instructs the mobile station 6 to directly transmit, in an uplink to the adjacent macro base: station 2#1, propagation state data.

The mobile station 6 first obtains propagation state data such as the path loss of a pilot signal transmitted from the macro base station 2#1 (Step S116).

Then, the measurement results data are directly transmitted in the uplink to the macro base station 2#1, which is an adjacent base station (Step S117). In the macro base station 2#1, a location of the mobile station 6 is estimated from the arrival angle and the reception strength, etc., of a wireless signal transmitted directly from the mobile station 6. If the direct transmission is normally received at the macro base station 2#1, an ACK is returned from the macro base station 2#1 to the mobile station 6 (Step S118). The mobile station 6 continues the process even if the ACK is not returned.

Then, the mobile station 6 transmits the measurement results to the home base station 3 (Step S119), and the home base station 3 transmits the received measurement results via the network 1 to the requestor macro base station 2#1. If multiple mobile stations reside within the communications area of the home base station 3, the home base station 3 may be arranged to be able to transmit the measurement results to the requestor macro base station 2#1 via the network 1 when the measurement results are collected from all of the multiple mobile stations.

The measurement results are directly transmitted in the uplink from the mobile 6 to the macro base station 2#1 and also transmitted to the macro base station 2#1 via the home base station 3 and the network 1 to ensure that the measurement results are conveyed since the direct transmission in the uplink does not necessarily arrive normally. Moreover, the primary purpose of directly transmitting the propagation state data in the uplink is location estimation. Thus, a predetermined pattern of data may be used in lieu of the propagation state data, in which case it becomes mandatory for the measurement results to be transmitted to the macro base station 2#1 from the mobile station 6 via the home base station 3 and the network 1.

The process as described above makes it possible to grasp at the macro base station 2#1 side, to what extent the radio waves from the macro base station 2#1 reach which locations within the communications area of the home base station 3.

### Third process example

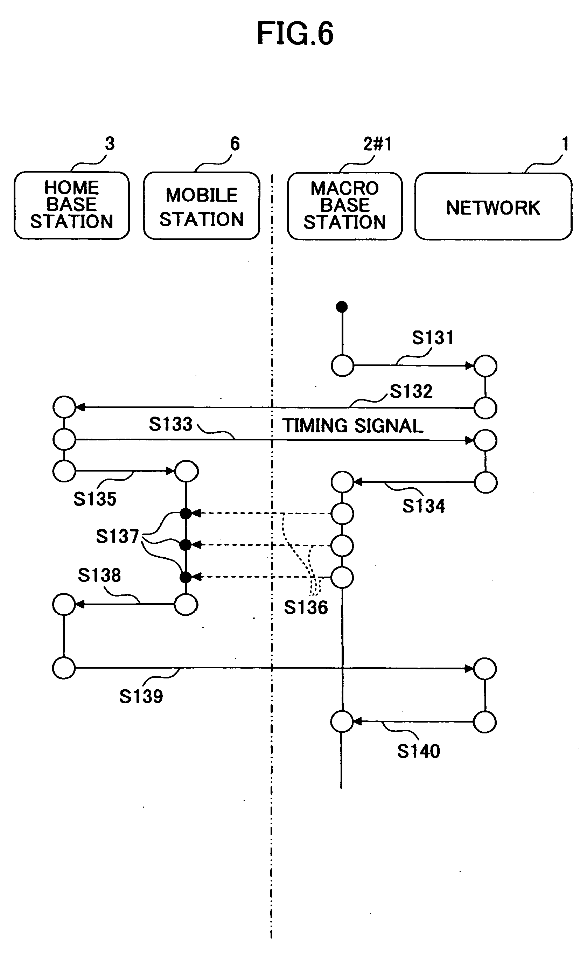

FIG. 6 is a diagram illustrating a third process example of the embodiment, which process example uses a special signal for adjacent area measurement. In other words, a mobile station, which does not have measurement as its primary purpose, has a measurement accuracy of the propagation state data that is low relative to a dedicated measurement apparatus for use by an operator at the communications provider side, and thus may not be sufficient for use in managing the communications area. Then, the base stations to be measured cooperate and transmit a special signal for adjacent area measurement to increase the measurement accuracy.

In FIG. 6, the macro base station 2#1 makes a request, via the network 1, for the propagation state of a wireless signal from the macro base station 2#1 within a communication area of the home base station 3 if there is a need to know, at the macro base station 2#1, such propagation state (Steps S131, S132).

In response, the home base station 3 reports measurement timing information via the network 1 to the macro base station 2#1 (Steps S133, S134).

Then, the home base station 3 makes a request to the mobile station 6 which resides within the communications area of the own base station, for sending, to the home base station 3, measurement data on the macro base station 2#1 (Step S135). At this time, that the measurement be made using a special signal for adjacent area measurement is also provided together with the timing information.

The macro base station 2#1 transmits multiple times, in accordance with timing information reported from the home base station 3, a special pilot signal for adjacent area measurement, which signal has increased transmit power (Step S136). In alignment with timing information reported from the home base station 3, the mobile station 6 receives the pilot signal transmitted from the macro base station 2#1 (Step S137), and from statistical data such as the path loss at which time the pilot signal is transmitted, the propagation state data is obtained. A higher than usual transmit power as well as a possibility of measuring multiple times make it possible to increase the measurement accuracy and also make it possible to measure low-level base station information which cannot be measured normally. Moreover, the mobile station 6 conducts measurement with respect to location information of the own mobile station apparatus. Then, the measurement results are transmitted to the home base station 3 (Step S138).

The home base station 3 transmits the received measurement results to the requestor macro base station 2#1 via the network 1 (Steps S139, 140). If multiple mobile stations reside within the communications area of the home base station 3, the home base station 3 may be arranged to be able to transmit the measurement results to the requestor macro base station 2#1 via the network 1 when the measurement results are collected from all of the multiple mobile stations.

The process as described above makes it possible to grasp at high accuracy at the macro base station 2#1 side to what extent, the radio waves from the macro base station 2#1 reach which locations within the communications area of the home base station 3.

### Fourth process example

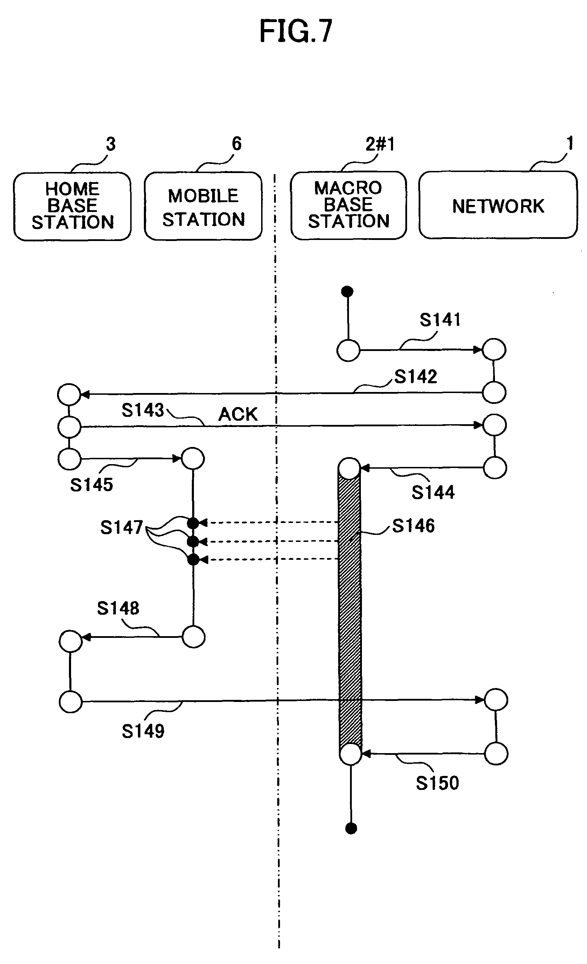

FIG. 7 is a diagram illustrating a fourth process example of the embodiment, which process example, in a manner similar to the third process example, increases the accuracy of measuring the propagation state by using a special signal for adjacent area measurement. The fourth process example is arranged such that special codes are continuously transmitted in succession over a predetermined time period rather than transmitting multiple times the special pilot signal for the adjacent area measurement.

In FIG. 7, the macro base station 2#1 makes a request, via the network 1, for the propagation state of a wireless signal from the macro base station 2#1 within a communication area of the home base station 3 if there is a need to know, at the macro base station 2#1, such propagation state (Steps S141, S142).

In response, the home base station 3 reports an ACK (acknowledge) via the network 1 to the macro base station 2#1 (Steps S143, S144).

Then, the home base station 3 makes a request to the mobile station 6 which resides within the communications area of the own base station, for sending, to the home base station 3, measurement data on the macro base station 2#1 (Step S145). At this time, that the measurement is to use a special signal for adjacent area measurement is also instructed.

The macro base station 2#1 successively transmits a special code for adjacent area measurement that has an increased transmit power (Step S146). The mobile station 6 receives multiple times a signal transmitted from the macro base station 2#1 (Step S147), and from statistical data such as the path loss at which time the signal is transmitted, the propagation state data is obtained. A higher than usual transmit power as well as a possibility of measurements multiple times make it possible to increase the measurement accuracy and also make it possible to measure low-level base station information which cannot be measured normally. Moreover, as the signal from the macro base station 2#1 is successively transmitted, there is no need to align the timing, making it possible for the mobile station 6 side to receive at a free timing. Furthermore, the mobile station 6 conducts measurement with respect to location information of the own mobile station apparatus by means of GPS, etc. Then, the measurement results are transmitted to the home base station 3 (Step S148).

The home base station 3 transmits the received measurement results to the requestor macro base station 2#1 via the network 1 (Steps S149, S150). If multiple mobile stations reside within the communications area of the home base station 3, the home base station 3 may be arranged to be able to transmit the measurement results to the requestor macro base station 2#1 via the network 1 when the measurement results are collected from all of the multiple mobile stations.

The process as described above makes it possible to grasp at high accuracy at the macro base station 2#1 side, to what extent the radio waves from the macro base station 2#1 reach which locations within the communications area of the home base station 3.

### Concluding remarks

As described above, the embodiment of the present invention has the following advantages:
(1) The propagation state may be measured by a mobile station which resides within a communications area of each base station, making it possible to reduce the load at the communications provider side.
(2) Measuring the propagation state is made possible even within the communications area of the home base station installed within the household, etc.
(3) Base stations to be measured cooperate to make it possible to increase the accuracy of measurement.
(4) Overall, it is made possible to efficiently measure the propagation state to include surrounding cells as well as area overlap.

The present application claims priority based on Japanese Patent Application No. 2007-120264, filed on April 27, 2007.

## Claims

1. A mobile communications system, comprising:
a unit, in a first base station apparatus, which is adapted to send an instruction from the first base station apparatus (2#1) which is one of adjacent base station apparatuses to a second base station apparatus (3) which is another of the adjacent base station apparatuses, the instruction being to cause a mobile station (UE) residing within a communications area of the second base station apparatus (3) to measure a propagation state of a wireless signal from the first base station apparatus (2#1) and report the measurement results to the first base station apparatus (2#1);
a unit, in the second base station apparatus, which is adapted to cause a mobile station apparatus (UE) residing within a communication area of the second base station apparatus (3) to measure a propagation state of a wireless signal from the first base station apparatus (2#1);
a unit, in the mobile station apparatus (UE), which is adapted to conduct a direct transmission to the first base station apparatus (2#1) in an uplink; and
a unit (26), in the first base station apparatus (2#1), which is adapted to estimate a location of the mobile station apparatus (UE) with its wireless signal.

2. The mobile communications system as claimed in claim 1, wherein
the mobile station apparatus (UE) is caused to measure a location of the own apparatus, and the measured location is collected together with measurement results of the propagation state.

3. The mobile communications system as claimed in claim 1, adapted to
transmit a special signal for adjacent area measurement from an adjacent base station apparatus, and the mobile station apparatus (UE) being adapted to measures the propagation state based on the special signal.

4. The mobile communications system as claimed in claim 1, comprising:
a unit which is adapted to obtain, in the first base station apparatus (2#1), measurement results from the second base station apparatus (3).

5. The mobile communications system as claimed in claim 4, wherein
the first base station apparatus (2#1) includes a unit which is adapted to obtain the measurement results from the mobile station apparatus (UE) in a direct transmission in an uplink.

6. A base station apparatus (2#1), comprising:
a unit which is adapted to send an instruction from the base station apparatus (2#1) which is one of adjacent base station apparatuses to a second base station apparatus (3) which is another of the adjacent base station apparatuses, the instruction being to cause a mobile station (UE) residing within a communications area of the second base station apparatus (3) to measure a propagation state of a wireless signal from the base station apparatus (2#1) and report the measurement results to the base station apparatus (2#1);
a unit which is adapted to estimate a location of the mobile station apparatus from an uplink transmit signal from the mobile station, directly transmitted to the base station.

7. A mobile station apparatus (UE), comprising:
a unit which is adapted to receive, from a second base station apparatus (3), a broadcast signal including an instruction to measure a propagation state of a wireless signal from a first base station apparatus (2#1);
a unit which is adapted to measure the propagation state of the wireless signal from the first base station apparatus (2#1); and
a unit which is adapted to directly transmit, to the first base station apparatus (2#1), the measurement results of the propagation state.

8. A method performed in a mobile communication system, comprising the steps of:
sending, by a first base station apparatus (2#1), an instruction from the first base station apparatus (2#1) which is one of adjacent base station apparatuses to a second base station apparatus (3) which is another of the adjacent base station apparatuses, the instruction being to cause a mobile station (UE) residing within a communications area of the second base station apparatus (3) to measure a propagation state of a wireless signal from the first base station apparatus (2#1) and report the measurement results to the first base station apparatus (2#1);
causing, by the second base station apparatus, a mobile station apparatus (UE) residing within a communication area of the second base station apparatus (3) to measure a propagation state of a wireless signal from the first base station apparatus (2#1) ;
conducting, by the mobile station apparatus (UE), a direct transmission to the first base station apparatus (2#1) in an uplink; and
estimating, by the first base station (2#1), a location of the mobile station apparatus (UE) with its wireless signal.

## Patentansprüche

1. Mobilkommunikationssystem, umfassend:
eine Einheit, in einer ersten Basisstationsvorrichtung, welche eingerichtet ist zum Senden eines Befehls von der ersten Basisstationsvorrichtung (2#1), welche eine von benachbarten Basisstationsvorrichtungen zu einer zweiten Basisstationsvorrichtung (3) ist, welche eine andere der benachbarten Basisstationsvorrichtungen ist, wobei der Befehl ist zum Verursachen, dass eine Mobilstation (UE), welche sich innerhalb eines Kommunikationsbereichs der zweiten Basisstationsvorrichtung (3) befindet, einen Ausbreitungszustand eines drahtlosen Signals von der ersten Basisstationsvorrichtung (2#1) zu messen und die Messergebnisse an die erste Basisstationsvorrichtung (2#1) zu berichten;
eine Einheit, in der zweiten Basisstationsvorrichtung, welche eingerichtet ist zum Verursachen, dass eine Mobilstationsvorrichtung (UE), welche sich innerhalb eines Kommunikationsbereichs der zweiten Basisstationsvorrichtung (3) befindet, einen Ausbreitungszustand eines drahtlosen Signals von der ersten Basisstationsvorrichtung (2#1) zu messen;
eine Einheit, in der Mobilstationsvorrichtung (UE), welche eingerichtet ist, um eine direkte Übertragung an die erste Basisstationsvorrichtung (2#1) in einem Uplink durchzuführen; und
eine Einheit (26), in der ersten Basisstationsvorrichtung (2#1), welche eingerichtet zum Abschätzen eines Orts der Mobilstationsvorrichtung (UE) mit ihrem drahtlosen Signal.

2. Mobilkommunikationssystem nach Anspruch 1, wobei verursacht wird, dass die Mobilstationsvorrichtung (UE) einen Ort der eigenen Vorrichtung misst und der gemessene Ort zusammen mit Messergebnissen des Ausbreitungszustands gesammelt wird.

3. Mobilkommunikationssystem nach Anspruch 1, eingerichtet zum
Übertragen eines speziellen Signals für Messungen benachbarter Bereiche von einer benachbarten Basisstationsvorrichtung, und wobei die Mobilstationsvorrichtung (UE) eingerichtet ist zum Messen des Ausbreitungszustands basierend auf dem speziellen Signal.

4. Mobilkommunikationssystem nach Anspruch 1, umfassend:
eine Einheit, welche eingerichtet ist zum Erlangen, in der ersten Basisstationsvorrichtung (2#1), von Messergebnissen von der zweiten Basisstationsvorrichtung (3).

5. Mobilkommunikationssystem nach Anspruch 4, wobei
die erste Basisstationsvorrichtung (2#1) eine Einheit beinhaltet, welche eingerichtet ist zum Erlangen der Messergebnisse von der Mobilstationsvorrichtung (UE) in einer direkten Übertragung im Uplink.

6. Basisstationsvorrichtung (2#1), umfassend:
eine Einheit, welche eingerichtet ist zum Senden eines Befehls von der Basisstationsvorrichtung (2#1), welche eine von benachbarten Basisstationsvorrichtungen ist, an eine zweite Basisstationsvorrichtung (3), welche eine andere der benachbarten Basisstationsvorrichtungen ist, wobei der Befehl ist zum Verursachen, dass eine Mobilstation (UE), welche sich innerhalb eines Kommunikationsbereichs der zweiten Basisstationsvorrichtung (3) befindet, einen Ausbreitungszustand eines drahtlosen Signals von der Basisstationsvorrichtung (2#1) misst und die Messergebnisse an die Basisstationsvorrichtung (2#1) berichtet;
eine Einheit, welche eingerichtet ist zum Abschätzen eines Orts einer Mobilstationsvorrichtung aus einem Uplinkübertragungssignal von der Mobilstation, direkt übertragen an die Basisstation.

7. Mobilstationsvorrichtung (UE), umfassend:
eine Einheit, welche eingerichtet ist zum Empfangen, von einer zweiten Basisstationsvorrichtung (3), eines Rundsendesignals, beinhaltend einen Befehl einen Ausbreitungszustand eines drahtlosen Signals von einer ersten Basisstationsvorrichtung (2#1) zu messen;
eine Einheit, welche eingerichtet ist zum Messen des Ausbreitungszustands des drahtlosen Signals von der ersten Basisstationsvorrichtung (2#1); und
eine Einheit, welche eingerichtet ist zum direkten Übertragen, an die erste Basisstationsvorrichtung (2#1), der Messergebnisse des Ausbreitungszustands.

8. Verfahren, durchgeführt in einem Mobilkommunikationssystem, die Schritte umfassend:
Senden, durch eine erste Basisstationsvorrichtung (2#1), und Instruieren von der ersten Basisstationsvorrichtung (2#1), welche eine von benachbarten Basisstationsvorrichtungen ist, an eine zweite Basisstationsvorrichtung (3), welche eine andere der benachbarten Basisstationsvorrichtungen, wobei der Befehl ist zum Verursachen, dass eine Mobilstation (UE), welche sich innerhalb eines Kommunikationsbereichs der zweiten Basisstationsvorrichtung (3) befindet, einen Ausbreitungszustand eines drahtlosen Signals von der ersten Basisstationsvorrichtung (2#1) misst und die Messergebnisse an die erste Basisstationsvorrichtung (2#1) berichtet;
Verursachen, durch die zweite Basisstationsvorrichtung, dass eine Mobilstationsvorrichtung (UE), welche sich innerhalb eines Kommunikationsbereichs der zweiten Basisstationsvorrichtung (3) befindet, einen Ausbreitungszustand eines drahtlosen Signals von der ersten Basisstationsvorrichtung (2#1) misst;
Durchführen, durch die Mobilstationsvorrichtung (UE), einer direkten Übertragung an die erste Basisstationsvorrichtung (2#1) in einem Uplink; und
Abschätzen, durch die erste Basisstation (2#1), eines Orts der Mobilstationsvorrichtung (UE) mit ihrem drahtlosen Signal.

## Revendications

1. Système de communication mobile comprenant :
une unité, dans un premier appareil de station de base, qui est adaptée pour envoyer une instruction du premier appareil de station de base (2#1) qui est l'un d'appareils de station de base adjacents à un deuxième appareil de station de base (3) qui est un autre des appareils de station de base adjacents, l'instruction étant destinée à amener une station mobile (UE) résidant dans une zone de communication du deuxième appareil de station de base (3) à mesurer un état de propagation d'un signal sans fil provenant du premier appareil de station de base (2#1) et rapporter les résultats de mesure au premier appareil de station de base (2#1) ;
une unité, dans le deuxième appareil de station de base, qui est adaptée pour amener un appareil de station mobile (UE) résidant dans une zone de communication du deuxième appareil de station de base (3) à mesurer un état de propagation d'un signal sans fil provenant du premier appareil de station de base (2#1) ;
une unité, dans l'appareil de station mobile (UE), qui est adaptée pour assurer une transmission directe vers le premier appareil de station de base (2#1) dans une liaison montante ; et
une unité (26), dans le premier appareil de station de base (2#1), qui est adaptée pour estimer un emplacement de l'appareil de station mobile (UE) avec son signal sans fil.

2. Système de communication mobile selon la revendication 1, dans lequel :
l'appareil de station mobile (UE) est amené à mesurer l'emplacement de son propre appareil et l'emplacement mesuré est recueilli conjointement avec des résultats de mesure de l'état de propagation.

3. Système de communication mobile selon la revendication 1, adapté :
pour transmettre un signal spécial pour une mesure de zone adjacente à partir d'un appareil de station de base adjacent et l'appareil de station mobile (UE) étant adapté pour mesurer l'état de propagation sur la base du signal spécial.

4. Système de communication mobile selon la revendication 1, comprenant :
une unité qui est adaptée pour obtenir, dans le premier appareil de station de base (2#1), des résultats de mesure du deuxième appareil de station de base (3).

5. Système de communication mobile selon la revendication 4, dans lequel :
le premier appareil de station de base (2#1) comprend une unité qui est adaptée pour obtenir les résultats de mesure de l'appareil de station mobile (UE) dans une transmission directe dans une liaison montante.

6. Appareil de station de base (2#1), comprenant :
une unité qui est adaptée pour envoyer une instruction du premier appareil de station de base (2#1), qui est l'un d'appareils de station de base adjacents, à un deuxième appareil de station de base (3) qui est un autre des appareils de station de base adjacents,
l'instruction étant destinée à amener une station mobile (UE) résidant dans une zone de communication du deuxième appareil de station de base (3) à mesurer un état de propagation d'un signal sans fil provenant du premier appareil de station de base (2#1) et rapporter les résultats de mesure au premier appareil de station de base (2#1) ;
une unité qui est adaptée pour estimer un emplacement de l'appareil de station mobile à partir d'un signal de transmission de liaison montante provenant de la station mobile, directement transmis à la station de base.

7. Appareil de station mobile (UE), comprenant :
une unité qui est adaptée pour recevoir d'un deuxième appareil de station de base (3) un signal de radiodiffusion comprenant une instruction pour mesurer un état de propagation d'un signal sans fil provenant d'un premier appareil de station de base (2#1) ;
une unité qui est adaptée pour mesurer l'état de propagation du signal sans fil provenant du premier appareil de station de base (2#1) ; et
une unité qui est adaptée pour transmettre directement au premier appareil de station de base (2#1) les résultats de mesure de l'état de propagation.

8. Procédé exécuté dans un système de communication mobile, comprenant les étapes suivantes consistant à :
envoyer par un premier appareil de station de base (2#1) une instruction du premier appareil de station de base (2#1) qui est l'un d'appareils de station de base adjacents à un deuxième appareil de station de base (3) qui est un autre des appareils de station de base adjacents, l'instruction étant destinée à amener une station mobile (UE) résidant dans une zone de communication du deuxième appareil de station de base (3) à mesurer un état de propagation d'un signal sans fil provenant du premier appareil de station de base (2#1) et signaler les résultats de mesure au premier appareil de station de base (2#1) ;
amener par le deuxième appareil de station de base un appareil de station mobile (UE) résidant dans une zone de communication du deuxième appareil de station de base (3) à mesurer un état de propagation d'un signal sans fil provenant du premier appareil de station de base (2#1) ;
effectuer par l'appareil de station mobile (UE)une transmission directe au premier appareil de station de base (2#1) dans une liaison montante ; et
estimer par la première station de base (2#1) un emplacement de l'appareil de station mobile (UE) avec son signal sans fil.
